# EUROPÄISCHE PATENTANMELDUNG

(11) **EP 1 759 986 A1**
(43) Veröffentlichungstag der Anmeldung: **07.03.2007**
(21) Anmeldenummer: 05018832.5
(22) Anmeldetag: 30.08.2005
(51) Int. Cl.: B63H 23/24, H02K 29/00

(54) **Elektrischer Bootsantrieb**

(71) Anmelder: Torqeedo GmbH, 82319 Starnberg (DE)
(72) Erfinder: Kraft, Klaus, 89134 Blaustein (DE); Walk, Heinrich, 89604 Allmendingen (DE); Böbel, Friedrich Dr., 82547 Eurasburg (DE)
(74) Vertreter: Gellner, Bernd

(57) **Zusammenfassung**

Ein Bootsantrieb umfast einen permanentmagneterregten, elektronisch kommutierten Synchronmotor (6) mit einem Stator (10) und einem Rotor (12). Der Stator (10) und der Rotor (12) besitzen eine unterschiedliche Anzahl von Polen (11a,11b,13).

## Beschreibung

Die Erfindung betrifft einen Bootsantrieb, der einen permanentmagneterregten, elektronisch kommutierten Synchronmotor mit einem Stator und einem Rotor umfasst.

Aufgrund strengerer Umweltschutzbestimmungen werden auf Seen und auch im küstennahen Bereich verstärkt Boote mit Elektroantrieben eingesetzt. Gegenüber Verbrennungsmotoren haben diese den Vorteil, geräuscharm zu sein und das Wasser nicht zu verschmutzen, was ansonsten insbesondere bei Zwei-Takt-Verbrennungsmotoren der Fall ist.

Die für den Betrieb von Elektromotoren notwendige elektrische Energie wird von Batterien zur Verfügung gestellt. Batterien sind allerdings vergleichsweise groß und schwer, so dass auf dem Boot nur eine begrenzte Anzahl Batterien untergebracht werden kann. Entsprechend wird die Reichweite eines elektrisch angetriebenen Bootes durch die Kapazität der Batterie begrenzt.

Bei Elektrobooten besteht daher die Notwendigkeit, einen Antrieb mit möglichst hohem Wirkungsgrad einzusetzen, um die begrenzte Kapazität der Batterien optimal auszunutzen. Üblicherweise umfasst der Bootsantrieb zumindest einen Motor und einen sich unter der Wasseroberfläche drehenden Propeller und Mittel zur Kraftübertragung vom Motor auf den Propeller.

Der Gesamtwirkungsgrad eines Bootsantriebs setzt sich zusammen aus dem Wirkungsgrad des Motors, dem der Kraftübertragung, der Kraftübersetzung und dem des Propellers. Der Wirkungsgrad eines Propellers hängt wesentlich von der Größe des Propellers ab. Aus energetischer Sicht ist es besonders günstig, einen möglichst großen, langsam drehenden Propeller einzusetzen. Der den Propeller antreibende Elektromotor sollte daher bei relativ niedrigen Drehzahlen ein möglichst großes Drehmoment aufbringen.

Zudem steigt der Schub eines Propellermotors quadratisch mit dem Durchmesser des Propellers. Sollen daher schwere Schiffe mittels eines Propellermotors geschoben werden, so sind ebenfalls große Propellerdurchmesser notwendig.

In der US 5,816,870 wird hierzu vorgeschlagen, einen überdimensionierten Elektromotor zu verwenden, der bei etwa 30 bis 40 % seiner Nennleistung betrieben wird. Auf diese Weise soll das notwendige hohe Drehmoment bei niedrigen Drehzahlen erreicht werden. Nachteilig an diesem Antrieb ist jedoch, dass die gewünschte Leistungscharakteristik, nämlich hohes Drehmoment bei kleiner Drehzahl, aufgrund der Überdimensionierung des Elektromotors durch ein hohes Gewicht erkauft wird.

Aufgabe vorliegender Erfindung ist es, einen Elektroantrieb für Boote zur Verfügung zu stellen, der einen möglichst hohen Wirkungsgrad bei niedrigem Eigengewicht besitzt.

Diese Aufgabe wird durch einen Bootsantrieb gelöst, der einen permanentmagneterregten, elektronisch kommutierten Synchronmotor mit einem Stator und einem Rotor umfasst, wobei der Stator und der Rotor eine unterschiedliche Anzahl von Polen besitzen.

Erfindungsgemäß wird ein bürstenloser Synchronmotor eingesetzt. Die elektrische Energie wird von einer Batterie oder einem Akku zur Verfügung gestellt. Der Gleichstrom der Batterie wird mittels eines Drehzahlstellers elektronisch in einen Drei- oder Mehr-Phasen-Drehstrom umgewandelt, das heißt elektronisch kommutiert.

Bei dem erfindungsgemäßen Motor besitzen der Stator und der Rotor eine unterschiedliche Anzahl an magnetischen Polen. Die unterschiedliche Polzahl bewirkt eine elektrische Drehzahluntersetzung. Im Gegensatz zu üblichen Synchronmotoren, bei denen der Rotor die gleiche Drehzahl wie das im Stator erzeugte Drehfeld besitzt, dreht sich der erfindungsgemäße Motor langsamer.

In einer bevorzugten Ausführung weist der Stator des Synchronmotors eine geradzahlige Anzahl von Statorzähnen auf, von denen nur jeder zweite mit einer Wicklung versehen ist. Die einzelnen Wicklungen werden von dem von dem Drehzahlsteller bereitgestellten Drei- oder Mehr-Phasen-Strom durchflossen, wodurch ein magnetisches Drehfeld erzeugt wird.

Unter dem Begriff Statorzähne sollen alle Arten von den magnetischen Fluss leitenden Vorsprüngen, Nuten oder Ein- bzw. Ausbuchtungen des Stators verstanden werden, auf bzw. in die elektrischen Strom leitende Wicklungen gewickelt werden können. Die Statorzähne sind dabei im Wesentlichen auf einem Kreis angeordnet.

Der erfindungsgemäße Synchronmotor wird permanentmagneterregt, das heißt, der Rotor besitzt mehrere gleichmäßig um seinen Umfang verteilte Permanentmagnete. Das im Stator rotierende magnetische Drehfeld wirkt auf die magnetischen Pole des Rotors ein und versetzt diesen in eine Drehbewegung.

Im Stator entsteht ein magnetischer Fluss, der sich von einem bewickelten Statorzahn über einen Teil des Rotors zum benachbarten Statorzahn und über den Stator zurück zu dem bewickelten Statorzahn erstreckt. Auf diese Weise bildet jeder Statorzahn, nicht nur ein bewickelter Statorzahn, einen magnetischen Pol.

Erfindungsgemäß sind auf dem Stator und dem Rotor eine unterschiedliche Zahl von magnetischen Polen vorgesehen. Auf die obige Ausführungsform angewandt, bedeutet dies, dass die Anzahl der Statorzähne ungleich der Anzahl der auf dem Rotor angebrachten Permanentmagnete ist. Wie bereits erwähnt, wird so auf elektrische Art die Drehzahl des Synchronmotors reduziert.

Vorzugsweise unterscheiden sich die Anzahl der Polpaare von Rotor und Stator um ±1, das heißt, entweder ist die Anzahl der Polpaare des Rotors um eins größer als die des Stators oder umgekehrt. Beim Rotor ergibt sich die Anzahl der Polpaare unmittelbar durch Halbierung der Zahl der auf dem Rotor befestigten Permanentmagnete. Beim Stator sind in der oben beschriebenen Ausführung mit bewickelten und unbewickelten Statorzähnen nicht nur die bewickelten Statorzähne zu berücksichtigen. Auch über die unbewickelten Statorzähne erstreckt sich der magnetische Fluss, so dass auch diese, und damit alle Statorzähne, als magnetische Pole auftreten. Die Anzahl der Polpaare des Stators entspricht somit der Hälfte der Statorzähne.

Von Vorteil besitzt der Rotor 4 bis 8, besonders bevorzugt 5 bis 7 Polpaare. In einer besonders bevorzugten Ausführungsform weist der Stator 12 Statorzähne auf, von denen 6 Zähne bewickelt sind. Die Anzahl der Statorpolpaare beträgt damit ebenfalls 6. Man kann zeigen, dass sich bei 6 Statorpolpaaren und 5 Rotorpolpaaren eine Drehzahluntersetzung von 1 zu 5 einstellt.

Eine noch günstigere Drehzahluntersetzung von 1 zu 7 wird erzielt, wenn - bei einem Stator mit 6 Polpaaren - der Rotor mit 7 Polpaaren beziehungsweise 14 Permanentmagneten ausgerüstet wird. Der Rotor dreht sich in diesem Fall 7mal langsamer als das im Stator erzeugte magnetische Drehfeld.

Durch die große Polzahl von 4 bis 8, besonders bevorzugt 5 bis 7, wird unabhängig vom Drehwinkel stets eine hohe gegenseitige Überdeckung der magnetischen Pole von Rotor und Stator erreicht. Der Abstand zwischen den magnetischen Polen des Rotors und denen des Stators ist in jeder Winkelstellung relativ gering, wodurch umgekehrt die magnetische Anziehungskraft relativ groß ist. Eine hohe Anziehungskraft ist gleichbedeutend mit einem hohen Drehmoment.

Der erfindungsgemäße Antrieb erzielt so bei niedriger Drehzahl - aufgrund der elektrischen Drehzahluntersetzung - ein hohes Drehmoment und erfüllt damit genau die Anforderungen, die an einen optimalen elektrischen Bootsmotor gestellt werden. Mit dem Motor können daher große Propeller mit niedriger Drehzahl angetrieben werden. Wie eingangs ausgeführt, können dadurch besonders hohe Wirkungsgrade erreicht werden. Das heißt, das Verhältnis der Leistung, die tatsächlich für den Bootsvorschub genutzt wird, zu der von der Batterie zur Verfügung gestellten Leistung ist hoch. Dies erlaubt bei gegebener Batteriekapazität eine beträchtliche Steigerung der Reichweite im Vergleich zu Booten mit herkömmlichem Elektromotor. Ferner erzeugt der erfindungsgemäße Bootsantrieb einen hohen Schub, so dass auch mit sehr leichten und kleinen Motoren große und schwere Boote oder Schiffe angetrieben werden können.

Von Vorteil wird der Elektromotor als Außenläufer ausgeführt. Der Stator ist im Zentrum angeordnet und der Rotor dreht sich außen um den Stator. Der Rotor kann ring- oder glockenförmig gestaltet sein. Die Drehachse des Rotors befindet sich im Zentrum des Stators und fällt mit der Symmetrieachse des Stators zusammen. Im Vergleich zu einem Innenläufer, bei dem sich der Rotor im Inneren des Stators dreht, hat der Außenläufer den Vorteil, dass aufgrund des größeren Abstandes der Permanentmagnete des Rotors von der Drehachse bei gleicher vom Statordrehfeld auf den Rotor ausgeübter Kraft ein höheres Drehmoment erzeugt wird.

Bei Außenläufer-Motoren herkömmlicher Bauart besteht die Gefahr, dass der Rotor und die daran befestigten Permanentmagnete den hohen Fliehkräften, die auf sie einwirken, nicht standhalten. Bei der erfindungsgemäßen Ausführung besteht diese Gefahr nicht, da die Fliehkräfte durch die elektrische Drehzahluntersetzung beträchtlich reduziert werden.

Die elektrische Drehzahluntersetzung hat den weiteren Vorteil, dass die in den Lagern des Rotors auftretenden Reibungskräfte deutlich verringert sind, da die Reibungskräfte proportional zur Drehzahl steigen. Die Erfindung erlaubt daher den Einsatz üblicher Lager. Auf teure Speziallager, wie beispielsweise Keramiklager, kann verzichtet werden.

Bevorzugt wird der erfindungsgemäße Bootsantrieb ohne zusätzliches Getriebe ausgeführt. Das heißt, die Drehzahl des Elektromotors wird einzig über die elektrische Drehzahluntersetzung reduziert. Ein Getriebe zur weiteren Drehzahlreduzierung ist nicht notwendig. Auf diese Weise wird zusätzliches Gewicht gespart und außerdem werden die mit einem Getriebe verbundenen Geräusche vermieden.

Von Vorteil wird ein sensorloser Drehzahlsteller verwendet. Es wird also auf einen speziellen Sensor verzichtet, um die aktuelle Rotorstellung festzustellen und an den Drehzahlsteller zu übermitteln.

Der erfindungsgemäße Motor wird vorzugsweise auf eine an der Motorwelle abgreifbare Leistung zwischen 100 W und 10 kW ausgelegt, besonders bevorzugt zwischen 100 W und 5000 W, ganz besonders bevorzugt zwischen 500 W und 4000 W.

Der Bootsmotor wird von Vorteil bei einer Betriebsspannung zwischen 12 V und 60 V betrieben. Die entsprechenden Ströme können in Abhängigkeit von der Motorenleistung durchaus mehr als 100 A betragen.

Das hohe Leistungsgewicht und das große mit dem erfindungsgemäßen Motor zu erreichende Drehmoment erlauben die Herstellung kompakter und leichter Motoren. Bei einem Außenbordmotor umfasst der Bootsantrieb zumindest den Motor, den Propeller, eine Welle oder ähnliche Kraftübertragungsvorrichtung und einen Schaft, der den sich unter Wasser befindlichen Teil des Antriebs mit dem Boot beziehungsweise mit dem sich über Wasser befindlichen Teil verbindet. Häufig ist die Energieversorgung, das heißt die Batterie oder ein Akku, ebenfalls in den Außenbordmotor integriert. Vorzugsweise besitzt nun der gesamte Antrieb ein Gewicht von weniger als 15 kg, besonders bevorzugt weniger als 10 kg. Der Bootsantrieb ist damit von jedermann leicht bedien- und handhabbar.

Wie bereits ausgeführt, erlaubt der erfindungsgemäße Elektromotor den Einsatz von relativ großen Propellern. Vorzugsweise werden Propeller mit einem Durchmesser von mehr als 20 cm Durchmesser, besonders bevorzugt von mehr als 30 cm Durchmesser verwendet.

Die Erfindung weist zahlreiche Vorteile gegenüber den bekannten elektrischen Bootsantrieben auf: Der erfindungsgemäße Motor kann äußerst kompakt und platzsparend gebaut werden. Zudem besitzt der Motor ein hohes Leistungsgewicht, das heißt die pro kg Motorengewicht erbrachte Leistung ist hoch. Insbesondere bei Verwendung großer Polzahlen von 10 und mehr besitzt der Motor ein hohes Drehmoment. Die Kombination hohes Drehmomentgewicht in Nm pro kg und hohes Leistungsgewicht in W pro kg ermöglicht die Herstellung leistungsfähiger, aber dennoch kleiner, leichter und kompakter Antriebe.

Durch die elektrische Drehzahluntersetzung liefert der erfindungsgemäße Motor ein hohes Drehmoment und eine hohe Leistung bei kleinen Drehzahlen. Teilweise ist es sogar möglich, auf ein Getriebe zur weiteren Drehzahlreduzierung zu verzichten. Die Erfindung ermöglicht damit den Einsatz großer, langsam drehender Propeller, wodurch der Gesamtwirkungsgrad des Bootsantriebs wesentlich erhöht wird und große Schubkräfte erzielt werden können.

Ein erfindungsgemäßer Bootsantrieb umfasst beispielsweise einen 2000 W Synchronmotor, der mit 24 V Batteriespannung versorgt wird. Der Motor wird bei einer Drehzahl von 6000 Umin⁻¹ betrieben. Ein 1 zu 7-Getriebe sorgt gegebenenfalls für eine weitere Drehzahluntersetzung. Der Propellerdurchmesser beträgt 30 cm. Ein solcher Bootsantrieb erreicht einen Gesamtwirkungsgrad von 50 %. Das heißt, 50 % der von der Batterie zur Verfügung gestellten Leistung wird in den Vortrieb des Bootes, das heißt kinetische Leistung (Kraft mal Geschwindigkeit) umgesetzt. Das Gewicht dieses Antriebs beträgt 15 kg.

Bei Booten unterscheidet man zwischen Verdrängerbooten, Halbgleitern und Gleitbooten. Der erfindungsgemäße Bootsantrieb eignet sich insbesondere zum Antrieb von Verdrängerbooten. Insbesondere bei Verdrängerbooten mit einer Grenzgeschwindigkeit zwischen 8 und 14 km/h kommen die positiven Eigenschaften des erfindunsgemäßen Antriebs, nämlich hohes Leistungsgewicht und hohes Drehmomentgewicht, zum Tragen.

Bevorzugt wird die Erfindung bei Segelbooten, Elektromotorbooten, Angler- und Ruderbooten, Kanadiem oder Schlauchbooten eingesetzt. Der erfindungsgemäße Bootsantrieb eignet sich insbesondere zum Bewegen von Booten mit einer Länge zwischen 6 und 14 m und einem Verdrängungsgewicht bis 2 t.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: einen erfindungsgemäßen Bootsantrieb und
- Figur 2: einen schematischen Querschnitt durch einen erfindungsgemäßen Synchronmotor.

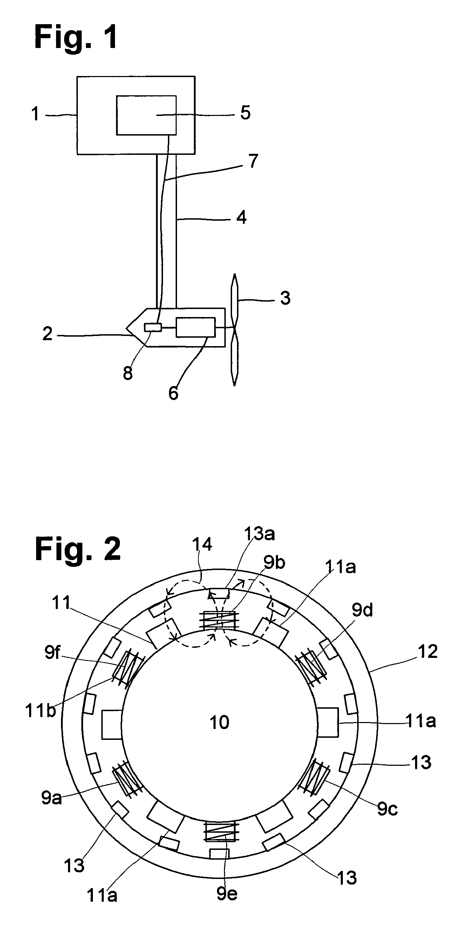

Der in Figur 1 dargestellte Außenbordmotor besteht im Wesentlichen aus einem Oberteil 1, einem Unterwasserteil 2, welches mit einem Propeller 3 versehen ist, und einem Schaft 4, der das Oberteil 1 mit dem Unterwasserteil 2 verbindet. Der Propeller 3 hat einen Durchmesser von 30 cm. Das Oberteil 1 beinhaltet einen Batteriesatz 5 als Stromversorgung. Der eigentliche Elektromotor 6 befindet sich im Unterwasserteil 2 und treibt den Propeller 3 über eine nicht dargestellte Welle an. Der Elektromotor 6 ist an den Batteriesatz 5 mittels eines elektrisch leitenden Kabels 7 angeschlossen, welches im Inneren des Schaftes 4 verläuft. Um die beim Betrieb des Elektromotors 6 hohen Strömen leiten zu können, wird ein elektrisches Kabel 7 mit einem Querschnitt von 10 mm² eingesetzt.

Figur 2 zeigt einen Querschnitt durch den Elektromotor 6. Der Elektromotor 6 ist als Synchronmotor ausgeführt, der von einem Drehzahlsteller 8 angesteuert wird. Über den Drehzahlsteller 8 wird der von den Batterien 5 gelieferte Strom elektronisch kommutiert und ein Drei-Phasen-Drehstrom erzeugt.

Der Stator 10 des Synchronmotors 6 besitzt insgesamt 12 Statorzähne 11a, 11b, von denen 6 Statorzähne 11b mit Wicklungen 9a, 9b, 9c, 9d, 9e, 9f versehen sind. Der Drei-Phasendrehstrom wird durch die Wicklungen 9a, 9b, 9c, 9d, 9e, 9f des Stators 10 geleitet und ruft auf diese Weise in dem Stator ein magnetisches Drehfeld hervor.

Der Rotor 12 ist glockenförmig ausgeführt und ist um den Stator 10 außen herum drehbar gelagert, das heißt der Motor 6 ist ein Außenläufermotor. Über den inneren Umfang des Rotors 12 des Synchronmotors 6 sind gleichmäßig 14 Permanentmagnete 13 verteilt. Im Betrieb wirkt das magnetische Drehfeld auf die Permanentmagnete 13 des Rotors 12 ein und versetzt den Rotor 12 in eine Drehbewegung.

Anhand der Wicklung 9b soll vereinfacht erläutert werden, wie die magnetischen Feldlinien im Synchronmotor 6 verlaufen. Der in der Wicklung 9b hervorgerufene, magnetische Fluss 14 fließt über den angrenzenden Permanentmagneten 13a auf den Rotor 12 und weiter über die benachbarten, nicht bewickelten Statorzähne 11a zurück. Auf diese Weise werden auch die unbewickelten Statorzähne 11a vom magnetischen Fluss durchzogen und wirken damit ebenfalls als magnetische Pole.

Bei der gezeigten Ausführungsform des Motors 6 besitzt der Stator 10 12 magnetische Pole oder entsprechend 6 Polpaare. Auf dem Rotor 12 sind 14 Permanentmagnete 13 aufgebracht, die demgemäß 7 magnetische Polpaare bilden. Die Anzahl der Polpaare des Rotors 12 übersteigt die des Stators 10 um +1. Beim Anlegen eines Drei-Phasen-Drehstroms an den Stator 10 wird der Rotor 12 wird der Rotor 12 in Rotation versetzt. Der Rotor 12 folgt aber nicht der Frequenz des Drehfelds, sondern dreht sich bei der gewählten Ausführung mit 7 Rotorpolpaaren um einen Faktor 7 langsamer als das magnetische Drehfeld. Der Synchronmotor 6 besitzt also eine elektrische Drehzahluntersetzung von 1 zu 7.

Unabhängig von der Winkelstellung des Rotors 12 befinden sich immer mehrere Permanentmagnete 13 in unmittelbarer Nähe der Statorpole 11a, 11b. Die gegenseitige Überdeckung der magnetischen Pole 13, 11a, 11b von Rotor 12 und Stator 10 ist immer hoch, so dass bei jeder Winkelstellung des Rotors 12 eine hohe Anziehungskraft zwischen den magnetischen Polen 13, 11a, 11b des Rotors 12 und des Stators 10 auftritt. Dementsprechend hat der Synchronmotor 6 ein großes Drehmoment.

## Patentansprüche

1. Bootsantrieb, der einen permanentmagneterregten, elektronisch kommutierten Synchronmotor (6) mit einem Stator (10) und einem Rotor (12) umfasst, **dadurch gekennzeichnet, dass** der Stator (10) und der Rotor (12) eine unterschiedliche Anzahl von Polen (11a, 11b, 13) besitzen.

2. Bootsantrieb nach Anspruch 1, **dadurch gekennzeichnet, dass** der Stator (10) Statorzähne (11a, 11b) für Statorwicklungen (9a, 9b,9c, 9d, 9e, 9f) aufweist, wobei nur die Hälfte (11b) der Statorzähne (11a, 11b) mit einer Wicklung (9a, 9b,9c, 9d, 9e, 9f) versehen sind.

3. Bootsantrieb nach einem der Ansprüche 1 oder 2, **dadurch gekennzeichnet, dass** sich die Anzahl der Polpaare des Rotors (12) und die Anzahl der Polpaare des Stators (10) um +/- 1 unterscheiden.

4. Bootsantrieb nach einem der Ansprüche 1 bis 3, **dadurch gekennzeichnet, dass** der Rotor (12) 4 bis 8, bevorzugt 5 bis 7 Polpaare besitzt.

5. Bootsantrieb nach einem der Ansprüche 1 bis 4, **dadurch gekennzeichnet, dass** der Synchronmotor (6) als Außenläufer ausgeführt ist.

6. Bootsantrieb nach einem der Ansprüche 1 bis 5, **dadurch gekennzeichnet, dass** ein sensorloser Drehzahlsteller (8) vorgesehen ist.

7. Bootsantrieb nach einem der Ansprüche 1 bis 6, **dadurch gekennzeichnet, dass** ein Propeller (3) mit einem Durchmesser von mehr als 20 cm, bevorzugt mehr als 30 cm vorgesehen ist.

8. Bootsantrieb nach einem der Ansprüche 1 bis 7, **dadurch gekennzeichnet, dass** der Synchronmotor (6) eine Leistung zwischen 100 W und 10 kW, bevorzugt zwischen 500 W und 5000 W erbringt.

9. Verwendung eines Bootsantrieb nach einem der Ansprüche 1 bis 8 für ein Verdrängerboot.
